# EUROPEAN PATENT APPLICATION

(11) **EP 4 755 657 A1**
(43) Date of publication of application: **10.06.2026**
(21) Application number: 24383342.3
(22) Date of filing: 09.12.2024
(51) Int. Cl.: B60B 7/00, B60B 7/04

(54) **INSERT FOR VEHICLE WHEELS AND METHOD FOR MANUFACTURING SAID INSERT**

(71) Applicant: Zanini Auto Grup, S.A., 08150 Parets del Vallés - Barcelona (ES)
(72) Inventor: DURÁN BOFILL, Pedro, 08150 Parets del Vallés (Barcelona) (ES); NOVELL PERELLO, Ramón Maria, 08150 Parets del Vallés (Barcelona) (ES); LOSILLA BASSET, Eduardo, 08150 Parets del Vallés (Barcelona) (ES); EGUINOA DE SAN ROMAN, Gonzalo, 08150 Parets del Vallés (Barcelona) (ES); COROMINAS SERRAT, Xavier, 08150 Parets del Vallés (Barcelona) (ES)
(74) Representative: Herrero & Asociados, S.L.

(57) **Abstract**

The insert for vehicle wheels comprises a body (1) and a decorative element (3), wherein the insert also comprises a transparent foil (2) attached to the body (1), the decorative element (3) being placed between the transparent foil (2) and the body (1). The method comprises providing a transparent foil (2) containing a decorative element (3) and attaching a body (1) to the transparent foil (2), being the decorative element (3) placed between the body (1) and the transparent foil (2).

It permits to provide an insert comprising a decorative element that shows patterns with different shapes and colors that can assure the resistance of the decorative element without the need to use additional protections.

## Description

The present invention relates to an insert for vehicle wheels, in particular, to an insert for vehicle wheels comprising a decorative element, and to a method for manufacturing said insert.

### Background of the invention

It is common to use inserts in wheels of vehicles for aesthetic reasons, wheel weight reduction or aerodynamic improved behavior. Normally, these inserts are made of plastic material and are fixed to the wheel rim, which is made of metal.

The aesthetic requirements have been increased along the time, being demanded not only painted or chrome plated finishings, that were the requirements when inserts appeared in the market, but also premium decorative elements using patterns with different shapes and different colors.

There are technologies that can support these types of finishings like either metal layers or in-mold or insert molding solutions that use decorated layers that are overmolded with the plastic body of the inserts.

The drawback of these solutions is that the decorative element is applied on the area of the film in contact with the environment. These solutions are applied widely inside the vehicle, but the applications in the exterior of the car requires to apply a clear coat on top of the film for protection.

Worst conditions appear when either metal layers or in-mold or insert molding parts are used in the wheel area due to the heat coming from the breaks and dust from the wear of the brake pads that needs a hard cleaning process. In this case, the protection of the decorative element is more critical even if the clear coat is used.

### Description of the invention

Therefore, an objective of the present invention is to provide an insert for vehicle wheels and a method for manufacturing said insert, said insert comprising a decorative element that shows patterns with different shapes and colors that can assure the resistance of the decorative element without the need to use additional protections.

The insert for vehicle wheels and the method of the invention solves the above-mentioned disadvantages and has other advantages which will be described below.

The insert for vehicle wheels and the method according to the present invention are described in the independent claims, and the dependent claims include additional features that are optional.

In particular, the insert for vehicle wheels comprises a body, a decorative element, and a transparent foil attached to the body, the decorative element being placed between the transparent foil and the body.

Preferably, the body and/or the transparent foil are made from plastic.

According to a preferred embodiment, the transparent foil is attached to the body by overmolding, gluing, or welding.

According to a possible embodiment, the insert can also comprise a transparent layer placed on the transparent foil.

Furthermore, the transparent layer is made from plastic.

The insert for vehicle wheels according to the present invention can also comprise a clear coat placed on the transparent foil or on the transparent layer.

According to a second aspect of the present invention, the method for manufacturing an insert for vehicle wheels comprises the following steps:
- providing a transparent foil containing a decorative element; and
- attaching a body to the transparent foil, being the decorative element placed between the body and the transparent foil.

Preferably, the step of attachment the transparent foil to the body is carried out by overmolding, gluing or welding.

According to a possible embodiment, the method also comprises the step of attaching a transparent layer on the transparent foil.

Furthermore, the attachment step of the transparent layer can be carried out at the same time as the attachment step of the transparent foil, e.g., by lamination.

In the method according to the present invention a clear coat can be applied on the transparent foil or on the transparent layer.

The insert for vehicle wheels according to the present invention is decorated and is protected by the transparent foil, so that there is no need to apply extra processes for an additional protection, being an ambient friendly solution.

Additionally, and if required, if a transparent layer on the transparent foil is used, it increases the protective properties of the insert.

Furthermore, in the insert according to the present invention, if overmolding is used to fix the transparent foil to the body, the material needs to be compatible with the material of the decorative element.

Different types of materials for the decorative element can be used increasing the number of materials that can be used for the insert.

### Brief description of the drawings

For a better understanding of what has been explained above, some drawings are included in which, schematically and only by way of a non-limiting example, a practical case of embodiment is shown.
Figure 1 shows a schematic cross section of the insert for vehicle wheels according to a first embodiment of the present invention; and
Figure 2 shows a schematic cross section of the insert for vehicle wheels according to a second embodiment of the present invention.

### Description of preferred embodiments

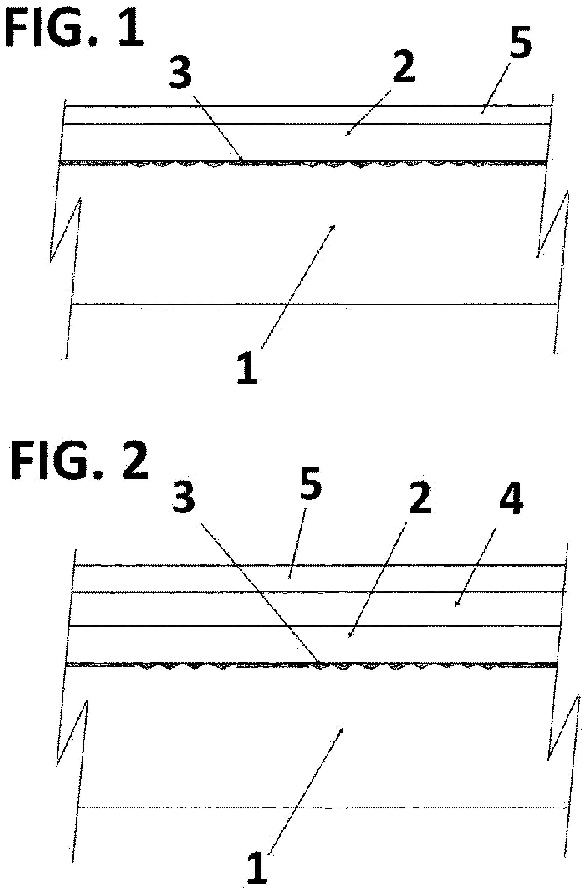

Figure 1 shows a schematic cross section of a first embodiment of the insert for vehicle wheels according to the present invention.

The insert comprises a body (1), a transparent foil (2) and a decorative element (3). This decorative element (3) is placed between the body (1) and the transparent foil (2), and it is preferably applied on a rear side of the transparent foil (2). This transparent foil (2) protects the decorative element (3) from the environment.

The protection provided by the transparent foil (2) to the decorative element (3) allows to use physical vapor deposition, PVD, in the decorative element (3), as well as use laser etching in the decorative element (3) in order to include illuminated solutions.

The fixation between the insert body (1) and the transparent foil (2) can be made by either overmolding, gluing, welding or other systems being compatible with the material of the decorative element (3) and the insert body (1).

The material of the transparent foil (2) needs to be resistant to the external agents. In the case that the material of the foil (2) needs additional protection from the external agents, it can be protected according to a second embodiment of the invention, that will be described hereinafter.

Fig 2 shows a schematic cross section of the second embodiment of the insert for vehicle wheels according to the present invention.

The insert for vehicle wheels according to this second embodiment also comprises a body (1), a decorative element (3) and a transparent foil (2), but also comprises a transparent layer (4) placed on the transparent foil (2).

Preferably, the transparent foil (2) and the transparent layer (4) are obtained by a unique lamination process. The material of the transparent foil (2) is compatible with the decorative element (3).

On the other side, the material of the transparent layer (4) is compatible with the material of the transparent foil (2), and it has high resistance to the environment, i.e., it should be resistant to UV radiation, chemical, thermal or mechanical endurance, among others.

One advantage of this second embodiment is that it is not needed to apply any clear coat for protection, being an ambient friendly solution. In any case, if needed, a clear coat (5), can be used also on top of the transparent layer (4) or replacing it. The clear coat (5) can either be applied as a final operation or on the transparent foil (2) or on the transparent layer (4) or before the fixation to the body (1).

Although reference has been made to a specific embodiment of the invention, it is obvious to a person skilled in the art that the insert for vehicle wheels and the method described are susceptible to numerous variations and modifications, and that all the details mentioned can be replaced by technically equivalent ones, without departing from the scope of protection defined by the appended claims.

## Claims

1. Insert for vehicle wheels, comprising a body (1) and a decorative element (3), **characterized in that** the insert also comprises a transparent foil (2) attached to the body (1), the decorative element (3) being placed between the transparent foil (2) and the body (1).

2. Insert for vehicle wheels according to claim 1, wherein the body (1) and/or the transparent foil (2) are made from plastic.

3. Insert for vehicle wheels according to claim 1 or 2, wherein the transparent foil (2) is attached to the body (1) by overmolding, gluing, or welding.

4. Insert for vehicle wheels according to any one of the previous claims, wherein the insert also comprises a transparent layer (4) placed on the transparent foil (2).

5. Insert for vehicle wheels according to claim 4, wherein the transparent layer (4) is made from plastic.

6. Insert for vehicle wheels according to claim 1, 2 or 3, wherein the insert also comprises a clear coat (5) placed on the transparent foil (2).

7. Insert for vehicle wheels according to claim 4 or 5, wherein the insert also comprises a clear coat (5) placed on the transparent layer (4).

8. Method for manufacturing an insert for vehicle wheels, comprising the following steps:
- providing a transparent foil (2) containing a decorative element (3); and
- attaching a body (1) to the transparent foil (2), being the decorative element (3) placed between the body (1) and the transparent foil (2).

9. Method for manufacturing an insert for vehicle wheels according to claim 8, wherein the step of attachment the transparent foil (2) to the body (1) is carried out by overmolding, gluing or welding.

10. Method for manufacturing an insert for vehicle wheels according to claim 8 or 9, wherein the method also comprises the step of attaching a transparent layer (4) on the transparent foil (2).

11. Method for manufacturing an insert for vehicle wheels according to claim 10, wherein the attachment step of the transparent layer (4) is carried out at the same time as the attachment step of the transparent foil (2).

12. Method for manufacturing an insert for vehicle wheels according to claim 11, wherein the attachment of the transparent layer (4) and the transparent foil (2) is carried out by lamination.

13. Method for manufacturing an insert for vehicle wheels according to claims 8 or 10 wherein a clear coat (5) is applied on the transparent foil (2) or on the transparent layer (4).
